# EUROPÄISCHE PATENTSCHRIFT

(11) **EP 2 257 449 B1**
(45) Veröffentlichungstag und Bekanntmachung des Hinweises auf die Patenterteilung: **09.04.2014**
(21) Anmeldenummer: 08873449.6
(22) Anmeldetag: 19.12.2008
(51) Int. Cl.: B60R 21/2165, B60R 21/16, B60R 21/215

(54) **AUSSTATTUNGSTEIL MIT AIRBAGAUSTRITTSKLAPPE**
FIXTURE HAVING AIRBAG OUTLET FLAP
PIÈCE D'ÉQUIPEMENT AVEC VOLET DE SORTIE DE COUSSIN GONFLABLE

(30) Priorität: 19.03.2008 DE 102008015044
(43) Veröffentlichungstag der Anmeldung: 08.12.2010
(73) Patentinhaber: Johnson Controls Interiors GmbH & Co. KG, 47929 Grefrath (DE)
(72) Erfinder: WITTKAMP, Jürgen, 41334 Nettetal (DE)
(74) Vertreter: Schwöbel, Thilo K.
(86) Internationale Anmeldenummer: PCT/EP2008/010967
(87) Internationale Veröffentlichungsnummer: WO 2009/115112

(56) Entgegenhaltungen:
- WO-A-2006/057632
- DE-A1- 19 958 865
- DE-A1-102007 005 922
- GB-A- 2 421 225
- US-A- 5 306 042

## Beschreibung

Die Erfindung betrifft ein Ausstattungsteil mit einer Airbagaustrittsklappe, insbesondere eine Armaturentafel für den Innenraum eines Kraftfahrzeugs.

Üblicherweise werden derartige Airbagaustrittsklappen durch Einformen oder nachträgliches Einschneiden oder Brennen einer Sollbruchstelle in den Träger des Ausstattungsteils erzeugt. Beim Auslösen des Airbags reißt diese Sollbruchstelle auf, wobei verhindert werden muss, dass sich die Airbagaustrittsklappe oder Teile davon vollständig vom Träger lösen bzw. sich unkontrolliert bewegen. Es kann daher auf der Rückseite des Trägers oder an anderer Stelle ein Verstärkungselement bzw. ein Fangband angeordnet sein, welches beispielsweise als Gelenk für die Bewegung der Airbagaustrittsklappe dient. Solche Anordnungen sind aus den Druckschriften DE 38 35 581 A1 bzw. DE 42 34 988 C2 bzw. JP 2002-200954 A bzw. GB 2 421 225 A bekannt.

Die GB 2 421 225A offenbart die Merkmale des Oberbegriffs des Anspruchs 1.

Der Erfindung liegt die Aufgabe zugrunde, den Bewegungsablauf der sich öffnenden Airbagaustrittsklappe bei sich entfaltendem Airbag zu optimieren.

Die Aufgabe wird gelöst durch ein Ausstattungsteil für ein Kraftfahrzeug gemäß Anspruch 1.

Hierdurch ist es in vorteilhafter Weise möglich, dass ein im Gelenkbereich vorgesehenes Verstärkungselement bei einer Auslösung des Airbags geringer belastet wird und so kleiner, leichter und kostengünstiger dimensioniert werden kann sowie auch ein höheres Sicherheitsniveau erzielt werden kann.

Erfindungsgemäß ist es bevorzugt, dass das Leitelement als ein einen weiteren Gelenkbereich aufweisendes, ansonsten jedoch im Wesentlichen mechanisch starres Leitelement vorgesehen ist.
Hierdurch ist es erfindungsgemäß vorteilhaft möglich, dass eine Kraftübertragung zwischen dem sich entfaltenden Airbag und der Airbagaustrittsklappe besonders effektiv erfolgt.

Erfindungsgemäß ist es weiterhin bevorzugt, dass das Leitelement ein dem Sollbruchstellenbereich der Airbagaustrittsklappe nähergelegenes erstes Ende aufweist, wobei das erste Ende in einer Normalsituation und/oder in einer Auslösesituation unmittelbar nach dem Beginn der Entfaltung des Airbags die Airbagaustrittsklappe im Bereich von 50% bis 90% ihrer Erstreckung ausgehend von dem Gelenkbereich berührt, bevorzugt im Bereich von 60% bis 80%, ganz besonders bevorzugt im Bereich von 65% bis 70%.

Hierdurch ist es erfindungsgemäß vorteilhaft möglich, dass die Belastung des Verstärkungselements bei einer Auslösung des Airbags wirksam verringert wird, weil die Airbagaustrittsklappe wirksam in eine Drehbewegung im Wesentlichen um den Gelenkbereich der Airbagaustrittsklappe gebracht wird.

Erfindungsgemäß ist es weiterhin auch bevorzugt, dass das Leitelement in einem Bereich zwischen der Airbagaustrittsklappe und dem Airbagmodul zu seinem zweiten Ende schräg zur Airbagaustrittsklappe verlaufend vorgesehen ist.

Hierdurch ist es vorteilhaft möglich, dass sich in den Raum zwischen Airbagmodul und Airbagaustrittsklappe schräg das biegesteife Leitelement erstreckt und dass die Airbagaustrittsklappe bevorzugt über ein biegeschlaffes Fangelement (bzw. das Verstärkungselement) mit der Armaturentafel verbunden ist.

Ein weiterer Gegenstand der vorliegenden Erfindung betrifft ein Verfahren zur Öffnung einer Airbagaustrittsklappe in einem Ausstattungsteil eines Kraftfahrzeugs, wobei das Ausstattungsteil im Bereich der Airbagaustrittsklappe wenigstens einen Sollbruchstellenbereich und wenigstens einen Gelenkbereich aufweist, wobei das Ausstattungsteil ein Airbagmodul mit einem Airbag aufweist, wobei bei der Entfaltung des Airbags eine Kraftbeaufschlagung des Airbags zuerst auf ein Leitelement durchgeführt wird und erst anschließend eine Kraftbeaufschlagung auf die Airbagaustrittsklappe durchgeführt wird.

Hierdurch kann in vorteilhafter Weise die Belastung auf das im Gelenkbereich vorgesehene Verstärkungselement (bzw. Fangelement) bei einer Auslösung des Airbags verringert werden und so kleiner, leichter und kostengünstiger dimensioniert werden.

Ferner ist es beim erfindungsgemäßen Verfahren bevorzugt, dass das Leitelement mit einem dem Sollbruchstellenbereich der Airbagaustrittsklappe nähergelegenen ersten Ende in einer Normalsituation und/oder in einer Auslösesituation unmittelbar nach dem Beginn der Entfaltung des Airbags die Airbagaustrittsklappe im Bereich von 50% bis 90% ihrer Erstreckung ausgehend von dem Gelenkbereich kraftbeaufschlagt, bevorzugt im Bereich von 60% bis 80%, ganz besonders bevorzugt im Bereich von 65% bis 70%.

Hierdurch ist es erfindungsgemäß vorteilhaft möglich, dass die Belastung des Verstärkungselements bei einer Auslösung des Airbags wirksam verringert wird, weil die Airbagaustrittsklappe wirksam in eine Drehbewegung im Wesentlichen um den Gelenkbereich der Airbagaustrittsklappe gebracht wird.

Die Figuren stellen beispielhaft und schematisch eine Ausführung der Erfindung dar. Richtungsangaben beziehen sich auf die übliche Fahrtrichtung.
Figur 1 zeigt in einer schematischen Schnittdarstellung einen Ausschnitt aus einer Armaturentafel als Beispiel eines Ausstattungsteils.
Figur 2 zeigt in einer weiteren schematischen Schnittdarstellung beispielhaft einen Ausschnitt aus einem Ausstattungsteil mit geschlossener Airbagaustrittsklappe.
Figur 3 zeigt in einer weiteren schematischen Schnittdarstellung beispielhaft einen Ausschnitt aus dem Ausstattungsteil mit geöffneter, aber noch nicht vollständig geöffneter Airbagaustrittsklappe.
Figur 4 zeigt in einer weiteren schematischen Schnittdarstellung beispielhaft einen Ausschnitt aus dem Ausstattungsteil mit vollständig geöffneter Airbagaustrittsklappe.
Die Figuren 5 bis 7 zeigen verschiedene Ansichten auf die Unterseite einer erfindungsgemäß gestalteten Armaturentafel 1.

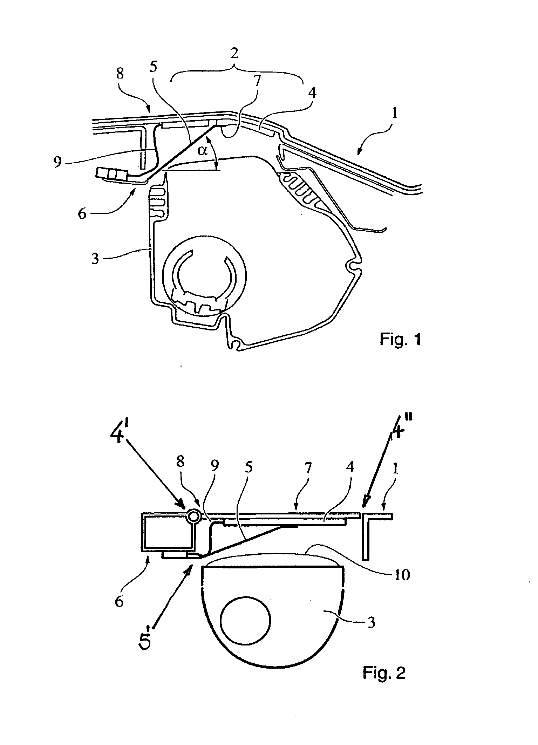

Die in den Figuren 1 und 2 im Schnitt gezeigte Armaturentafel 1 als Beispiel eines erfindungsgemäßen Ausstattungsteils 1 weist einen Airbagaustrittsbereich 2 für einen sich entfaltenden Airbag 10 auf, welcher in Bereitschaft in einem Airbagmodul 3 verstaut ist. Der Airbagaustrittsbereich 2 ist in Bereitschaft durch eine (im Beispiel insbesondere näherungsweise waagerecht angeordnete) Airbagaustrittsklappe 4 verschlossen, welche als gesondertes Bauteil gestaltet sein kann, vorzugsweise jedoch über eine Sollbruchstelle mit der Armaturentafel 1 bzw. dem Ausstattungsteil 1 einstückig verbunden ist. Der Bereich der Sollbruchstelle wird im Folgenden auch als Sollbruchstellenbereich 4" bezeichnet. Die Airbagaustrittsklappe 4 weist ferner auch einen Gelenkbereich 4' auf, der dafür vorgesehen ist, dass die Airbagaustrittsklappe 4 bei einer Auslösung des Airbags 10 um eine Drehachse im Bereich des Gelenkbereichs 4' aufgrund der Krafteinwirkung des Airbags gedreht wird.

In den Raum zwischen der Airbagaustrittsklappe 4 und dem Airbagmodul 3, welche zueinander (im Beispiel insbesondere in vertikaler Richtung) beanstandet sind, erstreckt sich (im dargestellten Beispiel insbesondere schräg) ein relativ biegesteifes Leitelement 5, das beispielsweise aus gepresstem Stahlblech bestehen kann. Das Leitelement 5 verläuft in einem Winkel α von beispielsweise 45° bis 60° nach oben und hinten, bzw. ausgehend von der Seite des Gelenkbereichs 4' in Richtung auf den Sollbruchstellenbereich 4". An seinem unteren, vorderen (zweiten) Ende 6 ist das Leitelement 5 gelenkig oder biegbar mit der Armaturentafel 1 verbunden (und weist daher einen weiteren Gelenkbereich 5' auf), während sein oberes, hinteres (also dem Innenraum zugewandtes) (zweites) Ende 7 von unten etwa mittig oder aber im Bereich von 50% bis 90% der Erstreckung der Airbagaustrittsklappe 4 ausgehend vom Gelenkbereich 4' an der Airbagaustrittsklappe 4 anliegt, also nicht schubfest mit dieser verbunden ist. Bevorzugt liegt das erste Ende 7 des Leitelements 5 in einem Bereich von 60% bis 80%, besonders bevorzugt in einem Bereich von 65% bis 70% an (der Rückseite) der Airbagaustrittsklappe 4 an.

Das vordere Ende 8 der Airbagaustrittsklappe 4, d.h. im Gelenkbereich 4' der Airbagaustrittsklappe 4, ist seinerseits über ein biegeschlaffes, zunächst nach unten und dann nach vorne verlaufendes Fangelement 9 (bzw. Verstärkungselement 9), beispielsweise ein mit Überlänge angebrachtes Textil, an der Armaturentafel 1 bzw. am Ausstattungsteil 1 gesichert. Im Ausführungsbeispiel sind Leitelement 5 und Fangelement 9 etwa an der gleichen Stelle an der Armaturentafel 1 befestigt.

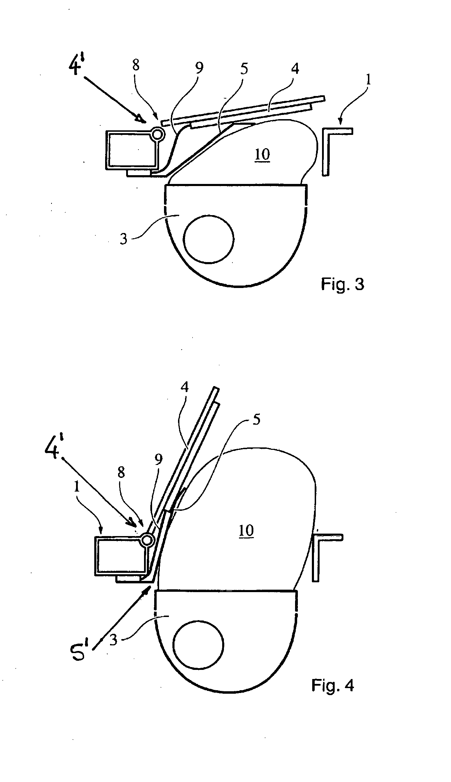

Beim in den Figuren 3 und 4 dargestellten Auslösen des Airbags 10 trifft dieser von unten auf das Leitelement 5 auf und wird von diesem schräg (nach hinten) abgelenkt, wobei sich die Airbagaustrittsklappe 4 nach oben mit einer gleichzeitigen leichten Drehung um den Gelenkbereich 4' (beispielsweise in Richtung der Windschutzscheibe) infolge Krafteinleitung über das Leitelement 5 von der Armaturentafel 1 löst. Die schlaufenartige Überlänge des Fangelements 9 braucht sich dabei sukzessive auf, während das Leitelement 5 entlang der Airbagaustrittsklappe 4 nach vorne, also in Richtung der Windschutzscheibe (gegenüber der Airbagaustrittsklappe 4) gleitet. Der Airbagaustrittsbereich 2 ist weitgehend freigegeben, wenn die Airbagaustrittsklappe 4 nach oben ragt, wobei das Fangelement 9 gespannt ist. Dabei stößt beispielsweise das vordere Ende 8 der Airbagaustrittsklappe 4 widerlagerartig an die zugeordnete Kante der Armaturentafel 1, wie dies in Figur 4 dargestellt ist.

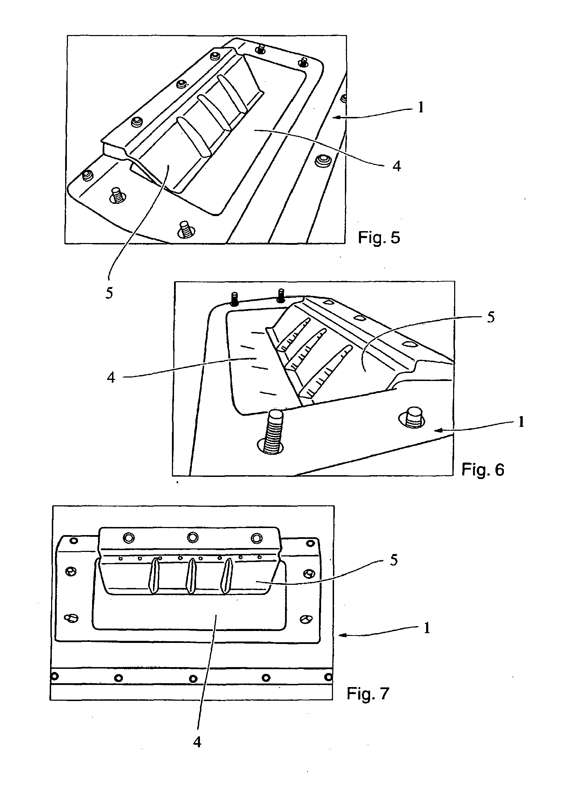

Die Figuren 5 bis 7 zeigen verschiedene Ansichten auf die Unterseite einer erfindungsgemäß gestalteten Armaturentafel 1, wobei das Leitelement 5, der weitere Gelenkbereich 5' des Leitelements 5, die Airbagaustrittsklappe 4 sowie das Armaturenbrett 1 bzw. das Ausstattungsteil 1 dargestellt ist.

### Bezugszeichenliste

- 1: Ausstattungsteil / Armaturentafel
- 2: Airbagaustrittsbereich
- 3: Airbagmodul
- 4: Airbagaustrittsklappe
- 4': Gelenkbereich
- 4": Sollbruchstellenbereich
- 5: Leitelement
- 5': weiterer Gelenkbereich
- 6: zweites Ende (des Leitelements 5)
- 7: erstes Ende (des Leitelements 5)
- 8: Ende (der Airbagaustrittsklappe)
- 9: Fangelement
- 10: Airbag

## Patentansprüche

1. Ausstattungsteil (1) für ein Kraftfahrzeug, wobei das Ausstattungsteil (1) eine Airbagaustrittsklappe (4) in einem Airbagaustrittsbereich (2) umfasst, wobei das Ausstattungsteil (1) im Bereich der Airbagaustrittsklappe (4) wenigstens einen Sollbruchstellenbereich (4") und wenigstens einen Gelenkbereich (4') aufweist, wobei das Ausstattungsteil (1) ein Airbagmodul (3) mit einem Airbag (10) aufweist, wobei das Ausstattungsteil (1) ein Leitelement (5) derart aufweist, dass bei der Entfaltung des Airbags (10) eine Kraftbeaufschlagung durch den Airbag auf das Leitelement (5) vorgesehen ist, **dadurch gekennzeichnet, dass** das Leitelement (5) in einem Winkel (α) nach oben und hinten ausgehend von der Seite des Gelenkbereichs (4') in Richtung auf den Sollbruchstellenbereich (4") verläuft, wobei das Leitelement (5) an seinem unteren vorderen Ende (6) gelenkig mit dem Ausstattungsteil (1) verbunden ist, wobei sein oberes, hinteres dem Innenraum zugewandtes Ende (7) von unten im Bereich von 50% bis 90% der Erstreckung der Airbagaustrittsklappe (4) ausgehend vom Gelenkbereich (4') an der Airbagaustrittsklappe (4) anliegt.

2. Ausstattungsteil (1) nach Anspruch 1, **dadurch gekennzeichnet, dass** das Leitelement (5) als ein einen weiteren Gelenkbereich (5') aufweisendes, ansonsten jedoch im Wesentlichen mechanisch starres Leitelement (5) vorgesehen ist.

3. Ausstattungsteil (1) nach einem der vorhergehenden Ansprüche, **dadurch gekennzeichnet, dass** das Leitelement (5) in einem Bereich zwischen der Airbagaustrittsklappe (4) und dem Airbagmodul (3) zu seinem zweiten Ende (7) schräg zur Airbagaustrittsklappe (4) verlaufend vorgesehen ist.

4. Verfahren zur Öffnung einer Airbagaustrittsklappe (4) in einem Ausstattungsteil (1) eines Kraftfahrzeugs gemäß einem der vorhergehenden Ansprüche, **dadurch gekennzeichnet, dass** bei der Entfaltung des Airbags (10) eine Kraftbeaufschlagung des Airbags (10) zuerst auf das Leitelement (5) durchgeführt wird und erst anschließend eine Kraftbeaufschlagung auf die Airbagaustrittsklappe (4) durchgeführt wird.

5. Verfahren nach Anspruch 4, **dadurch gekennzeichnet, dass** das Leitelement (5) mit dem dem Sollbruchstellenbereich (4") der Airbagaustrittsklappe (4) nähergelegenen ersten Ende (7) in einer Normalsituation und/oder in einer Auslösesituation unmittelbar nach dem Beginn der Entfaltung des Airbags (10) die Airbagaustrittsklappe (4) im Bereich von 50% bis 90% ihrer Erstreckung ausgehend von dem Gelenkbereich (4') kraftbeaufschlagt, bevorzugt im Bereich von 60% bis 80%, ganz besonders bevorzugt im Bereich von 65% bis 70%.

## Claims

1. Fixture (1) for a motor vehicle, the fixture (1) having an airbag outlet flap (4) in an airbag outlet region (2), the fixture (1) in the region of the airbag outlet flap (4) comprising at least one predetermined breaking point region (4") and at least one joint region (4'), the fixture (1) comprising an airbag module (3) with an airbag (10), the fixture (1) comprising a guide element (5) such that when the airbag (10) is deployed, force is applied by the airbag onto the guide element (5), **characterized in that** the guide element (5) extends at an angle (α) upwards and to the rear proceeding from the side of the joint region (4') in the direction of the predetermined breaking point region (4"), the guide element (5) being connected at its lower, front end (6) in an articulated manner to the fixture (1), its upper, rear end (7) facing the interior bearing from below in the range of 50% to 90% of the extent of the airbag outlet flap (4), proceeding from the joint region (4'), against the airbag outlet flap (4).

2. Fixture (1) according to Claim 1, **characterized in that** the guide element (5) is provided as a guide element (5) comprising a further joint region (5') but which is otherwise substantially mechanically rigid.

3. Fixture (1) according to one of the preceding claims, **characterized in that** the guide element (5) is provided to extend in a region between the airbag outlet flap (4) and the airbag module (3) at its second end (7), obliquely relative to the airbag outlet flap (4).

4. Method for opening an airbag outlet flap (4) in a fixture (1) of a motor vehicle according to one of the preceding claims, **characterized in that** the airbag (10) initially applies force onto the guide element (5) when the airbag (10) is deployed and only subsequently is force applied onto the airbag outlet flap (4).

5. Method according to Claim 4, **characterized in that** the guide element (5) comprising the first end (7) located closer to the predetermined breaking point region (4") of the airbag outlet flap (4), in a normal situation and/or in a triggered situation immediately after the start of the deployment of the airbag (10), applies force onto the airbag outlet flap (4) in the range of 50% to 90% of its extent, proceeding from the joint region (4'), preferably in the range of 60% to 80%, and quite particularly preferably in the range of 65% to 70%.

## Revendications

1. Pièce d'équipement (1) pour un véhicule automobile, la pièce d'équipement (1) comprenant un volet de sortie d'airbag (4) dans une région de sortie d'airbag (2), la pièce d'équipement (1) présentant, dans la région du volet de sortie d'airbag (4), au moins une région destinée à la rupture (4 ") et au moins une région d'articulation (4'), la pièce d'équipement (1) présentant un module d'airbag (3) avec un airbag (10), la pièce d'équipement (1) présentant un élément directeur (5) de telle sorte que lors du déploiement de l'airbag (10), une force soit appliquée par l'airbag sur l'élément directeur (5), **caractérisée en ce que** l'élément directeur (5) s'étend suivant un angle (α) vers le haut et vers l'arrière à partir du côté de la région d'articulation (4') dans la direction de la région destinée à la rupture (4"), l'élément directeur (5) étant connecté au niveau de son extrémité inférieure avant (6) de manière articulée à la pièce d'équipement (1), son extrémité supérieure arrière (7) tournée vers l'habitacle s'appliquant par le bas contre le volet de sortie d'airbag (4) dans une plage de 50 % à 90 % de l'étendue du volet de sortie d'airbag (4) à partir de la région d'articulation (4').

2. Pièce d'équipement (1) selon la revendication 1, **caractérisée en ce que** l'élément directeur (5) est prévu sous forme d'élément directeur (5) présentant une autre région d'articulation (5') mais par ailleurs toutefois essentiellement rigide mécaniquement.

3. Pièce d'équipement (1) selon l'une quelconque des revendications précédentes, **caractérisée en ce que** l'élément directeur (5) est prévu dans une région entre le volet de sortie d'airbag (4) et le module d'airbag (3) jusqu'à sa deuxième extrémité (7) de manière à s'étendre obliquement vers le volet de sortie d'airbag (4).

4. Procédé d'ouverture d'un volet de sortie d'airbag (4) dans une pièce d'équipement (1) d'un véhicule automobile selon l'une quelconque des revendications précédentes, **caractérisé en ce que** lors du déploiement de l'airbag (10), une force est d'abord appliquée par l'airbag (10) sur l'élément directeur (5) et seulement ensuite une force est appliquée sur le volet de sortie d'airbag (4).

5. Procédé selon la revendication 4, **caractérisé en ce que** l'élément directeur (5), avec la première extrémité (7) la plus proche de la région destinée à la rupture (4 ") du volet de sortie d'airbag (4), dans une situation normale et/ou dans une situation de déclenchement directement après le début du déploiement de l'airbag (10), sollicite le volet de sortie d'airbag (4) avec une force dans une plage de 50 % à 90 % de son étendue à partir de la région d'articulation (4'), de préférence dans une plage de 60 % à 80 %, tout particulièrement préférablement dans une plage de 65 % à 70 %.
